# FASCICULE DE BREVET EUROPEEN

(11) **EP 4 486 595 B1**
(45) Date de publication et mention de la délivrance du brevet: **26.08.2026**
(21) Numéro de dépôt: 23711517.5
(22) Date de dépôt: 24.02.2023
(51) Int. Cl.: B60L 53/14, B60L 53/18, B65H 75/42, B65H 75/44, H02G 11/02, H02J 7/00, H02J 7/70, G05D 1/00, B60L 53/35, B65H 75/40, B60L 53/38, B60L 53/39, B60L 53/37, B60L 53/12

(54) **ROBOT CHARGEUR POUR VEHICULE A MOTEUR ELECTRIQUE, A GUIDAGE VIA SON CABLE ELECTRIQUE DEROULE ET SON PROCEDE DE FONCTIONNEMENT**
ROBOTORLADEVORRICHTUNG FÜR FAHRZEUG MIT ELEKTROMOTOR, MIT FÜHRUNG DURCH DEN ABGEWICKWELTEN ELEKTROKABEL UND DESSEN BETRIEBSVERFAHREN
ROBOT CHARGER FOR ELECTRIC MOTOR VEHICLE WITH GUIDANCE VIA ITS UNROLLED ELECTRIC CABLE AND OPERATING METHOD THEREOF

(30) Priorité: 28.02.2022 FR 2201736
(43) Date de publication de la demande: 08.01.2025
(73) Titulaire: Electricfil Automotive, 01700 Beynost (FR)
(72) Inventeur: RAQUIN, Stéphane, 69400 VILLEFRANCHE-SUR-SAONE (FR); YVON, Jean-Baptiste, 38300 BOURGOIN-JALLIEU (FR)
(74) Mandataire: Cabinet Beau de Loménie
(86) Numéro de dépôt international: PCT/FR2023/050264
(87) Numéro de publication internationale: WO 2023/161593

(56) Documents cités:
- EP-A1- 2 684 733
- WO-A1-2019/185589
- FR-A1- 3 069 813
- FR-A1- 3 072 339
- JP-A- 2013 198 187

## Description

### Domaine Technique

L'invention concerne les dispositifs et procédés pour la recharge électrique d'une batterie d'accumulateurs électriques d'un véhicule à moteur électrique au sens général, par l'intermédiaire d'un robot chargeur relié via un câble électrique, à un appareil d'alimentation électrique.

### Technique antérieure

Les véhicules à moteur électrique comportent une batterie d'accumulateurs électriques embarquée servant de source d'énergie électrique pour un ou plusieurs moteur(s)/actionneur(s) électrique(s) embarqué(s) dans le véhicule. De tels véhicules incluent des véhicules automobiles destinés au transport de personnes, ou de marchandises ou de matériaux en vrac, tels que des voitures particulières, des autobus, des camions, des engins sur rails, des bateaux, des aéronefs, etc. mais peuvent recouvrir également des véhicules industriels automobiles, tels que des chariots de transport, des engins de travaux publics (pelleteuses, chargeuses, niveleuses, tombereaux, compacteurs, etc.).

Pour de tels véhicules, il est généralement prévu que la batterie d'accumulateurs électriques soit rechargée à intervalles réguliers par connexion à une source d'énergie électrique externe, généralement une source fixe, notamment au niveau d'une borne de recharge. Selon une technique connue, le véhicule et la borne de recharge sont munis chacun d'une prise compatible, en principe selon une géométrie complémentaire de type mâle/femelle, permettant, par accouplement des deux prises, de relier un circuit électrique du véhicule à un circuit électrique de la borne de recharge par conduction électrique au niveau de broches de contact des deux prises.

Cette solution impose à l'usager de brancher quotidiennement le véhicule à une borne de recharge. Pour éviter cet inconvénient, la demande de brevet DE 10 2014 226 357 décrit un robot chargeur mobile pour charger un accumulateur électrique d'un véhicule à moteur électrique en stationnement. Ce robot chargeur est relié via un câble électrique, à un appareil ou à une borne d'alimentation électrique fixe. Le robot chargeur est apte à se déplacer et à se positionner sous le véhicule afin d'y établir une connexion conductrice avec une prise de charge intégrée dans le véhicule afin d'assurer le rechargement de la batterie d'accumulateurs électriques du véhicule.

Lors de son déplacement, le robot chargeur tire le câble électrique derrière lui. Le câble électrique peut se coincer en raison d'obstacles tels que les pneus du véhicule dont la position de stationnement est parfois aléatoire.

La demande de brevet FR 3 069 813 décrit un robot chargeur pour charger une batterie électrique d'un véhicule en stationnement. Le robot chargeur comporte une bobine primaire reliée à une source électrique, par un câble d'alimentation enroulé en boucles dans un espace périphérique du robot. Le robot chargeur comporte des moyens de déplacement pour positionner la bobine primaire de manière à transférer par induction, l'énergie électrique à une bobine secondaire transformant l'énergie électrique en courant de recharge de la batterie. Le robot comporte des moyens d'analyse déterminant des informations représentatives des positions successives du robot sur la surface de roulage. En fonction de ces informations de position, des moyens contrôlent les moyens de déplacement afin que le robot effectue des rotations induisant un désenroulement contrôlé du câble d'alimentation qui demeure tendu pendant les déplacements. Les déplacements du robot chargeur sont déterminés pour se diriger vers la zone de recharge selon une ligne réalisée sur la surface de roulage. Outre le fait que cette solution nécessite de réaliser un aménagement complexe et peu flexible de la zone de rechargement, cette solution ne prend pas en compte la position aléatoire de stationnement du véhicule.

La demande de brevet WO 2019/185589 décrit un robot chargeur mobile comportant un tambour d'enroulement pour le câble électrique adapté pour enrouler et dérouler le câble électrique en fonction du mouvement du robot chargeur. Le tambour d'enroulement est motorisé en rotation de sorte que la vitesse à laquelle le câble électrique est dévidé ou enroulé est synchronisée avec la vitesse de déplacement du robot chargeur. De ce fait, le robot chargeur dépose ou reprend le câble électrique sur son parcours sans exercer de tension importante sur le câble électrique et sans que le câble électrique puisse se coincer. Toutefois, il est à noter que le retour du robot chargeur à la borne d'alimentation électrique fixe nécessite la mise en œuvre d'un système de guidage complexe et onéreux. JP 2013 198187 A divulgue robot chargeur pour charger un accumulateur électrique d'un véhicule à moteur électrique en stationnement, relié via un câble électrique, à un appareil d'alimentation électrique, le robot chargeur comportant un système de déplacement du robot chargeur, un système de commande agissant sur le système de déplacement du robot chargeur pour déplacer le robot chargeur entre l'appareil d'alimentation électrique et l'accumulateur électrique du véhicule à moteur électrique en stationnement, un dispositif de connexion électrique pour charger l'accumulateur électrique du véhicule, relié au câble électrique, un système pour dérouler et enrouler automatiquement le câble électrique avec une tension sur le câble électrique sensiblement nulle, piloté par le système de commande.

### Exposé de l'invention

La présente invention vise à remédier aux inconvénients de l'art antérieur en proposant un robot chargeur relié via un câble électrique, à un appareil d'alimentation électrique, pour charger un accumulateur électrique d'un véhicule à moteur électrique en stationnement, le robot chargeur étant conçu pour assurer son déplacement sans risque de coincement de son câble électrique tout en permettant un retour simple et sûr du robot chargeur à l'appareil d'alimentation électrique fixe.

Pour atteindre un tel objectif, l'objet de l'invention concerne un robot chargeur pour charger un accumulateur électrique d'un véhicule à moteur électrique en stationnement, relié via un câble électrique, à un appareil d'alimentation électrique, le robot chargeur comportant :
- un système de déplacement du robot chargeur,
- un système de commande agissant sur le système de déplacement du robot chargeur pour déplacer le robot chargeur entre l'appareil d'alimentation électrique et l'accumulateur électrique du véhicule à moteur électrique en stationnement,
- un dispositif de connexion électrique pour charger l'accumulateur électrique du véhicule, relié au câble électrique,
- un système pour dérouler et enrouler automatiquement le câble électrique avec une tension sur le câble électrique sensiblement nulle, piloté par le système de commande,
- un dispositif de détection pour détecter l'orientation par rapport au déplacement du robot chargeur, du câble électrique déroulé en sortie du robot chargeur, ce système de détection étant relié au système de commande afin que lors de l'enroulement du câble électrique, le déplacement du robot chargeur suive l'orientation du câble électrique déroulé en sortie du robot chargeur.

Avantageusement, le dispositif de détection détecte l'orientation du câble électrique lors d'un déplacement retour du robot chargeur pour lequel le système enroule le câble électrique avec une tension sensiblement nulle.

Selon une variante préférée de réalisation, le dispositif de détection comporte un bras monté pivotant sur le robot chargeur et monté pour être sollicité angulairement par le câble électrique déroulé en sortie du robot chargeur lors du déplacement du robot chargeur, le bras pivotant sollicitant un capteur de détection du pivotement du bras pivotant, relié au système de commande pour agir sur le système de déplacement du robot chargeur afin que le pivotement du bras reste inférieur à une valeur limite de déviation.

Avantageusement, le bras pivotant est monté dans le plan longitudinal de symétrie pour être sollicité en sortie d'un duo de galets entrainant le câble électrique en sortie du robot chargeur.

Selon un autre exemple de réalisation, le dispositif de détection comporte une caméra de visualisation du câble électrique déroulé en sortie du robot chargeur, cette caméra étant reliée au système de commande afin que le robot chargeur suive l'orientation du câble électrique déroulé en sortie du robot chargeur.

De préférence, le système de commande communique avec un système de navigation pourvu d'un système de détection d'obstacles.

Selon une caractéristique de mise œuvre, le système pour dérouler et enrouler automatiquement le câble électrique avec une tension sur le câble électrique sensiblement nulle, comporte un système de mesure de la distance parcourue par le robot chargeur et un système de mesure de la distance du câble cours de déroulement ou en cours d'enroulement, reliés au système de commande qui pilote le système de déplacement du robot chargeur de manière que la distance parcourue par le robot chargeur et la distance déroulée ou enroulée du câble électrique dans une même unité de temps, reste sensiblement identique.

Selon une caractéristique préférée de réalisation, le câble électrique est pris en charge en sortie d'un tambour d'enroulement, par un duo de galets dont au moins un galet est relié à une motorisation pilotée pour aider au déplacement du câble électrique.

Selon un autre objet, l'invention vise à offrir un procédé de fonctionnement d'un robot chargeur pour charger un accumulateur électrique d'un véhicule à moteur électrique en stationnement, relié via un câble électrique, à un appareil d'alimentation électrique, le procédé comportant les étapes suivantes:
- déplacement aller du robot chargeur de sa position de stationnement à la position de chargement de l'accumulateur électrique du véhicule, en déroulant le câble électrique selon une trajectoire avec une tension sur le câble électrique sensiblement nulle,
- chargement de l'accumulateur électrique du véhicule via le câble électrique,
- déplacement retour du robot chargeur de la position de chargement de l'accumulateur électrique du véhicule à sa position de stationnement, en détectant l'orientation par rapport au déplacement du robot chargeur, du câble électrique déroulé en sortie du robot chargeur, afin de piloter le déplacement du robot chargeur pour suivre la trajectoire du câble électrique déroulé pendant le déplacement aller et en enroulant le câble électrique au fur et à mesure du déplacement retour du robot chargeur.

Avantageusement, lors du déplacement retour du robot chargeur, on détecte l'orientation par rapport au déplacement du robot chargeur, du câble électrique déroulé en sortie du robot chargeur, afin de piloter le déplacement du robot chargeur pour suivre l'orientation du câble électrique déroulé en sortie du robot chargeur.

De préférence, lorsque lors du déplacement retour du robot chargeur un arrêt imprévu du robot chargeur est détecté, un signal d'avertissement est émis.

### Brève description des dessins

[Fig. 1] La figure 1 est une vue schématique de dessus illustrant un exemple de réalisation d'un robot chargeur conforme à l'invention en position d'attente à proximité d'un véhicule à moteur électrique en stationnement.
[Fig. 2] La figure 2 est une vue schématique de dessus illustrant un exemple de réalisation d'un robot chargeur conforme à l'invention en cours de déplacement pour charger un accumulateur électrique d'un véhicule à moteur électrique en stationnement.
[Fig. 3] La figure 3 est une vue schématique de dessous illustrant un exemple de réalisation d'un robot chargeur conforme à l'invention positionné à proximité pour charger un accumulateur électrique d'un véhicule à moteur électrique en stationnement.
[Fig. 4] La figure 4 est une vue en perspective de ¾ avant d'un exemple de réalisation d'un robot chargeur conforme à l'invention.

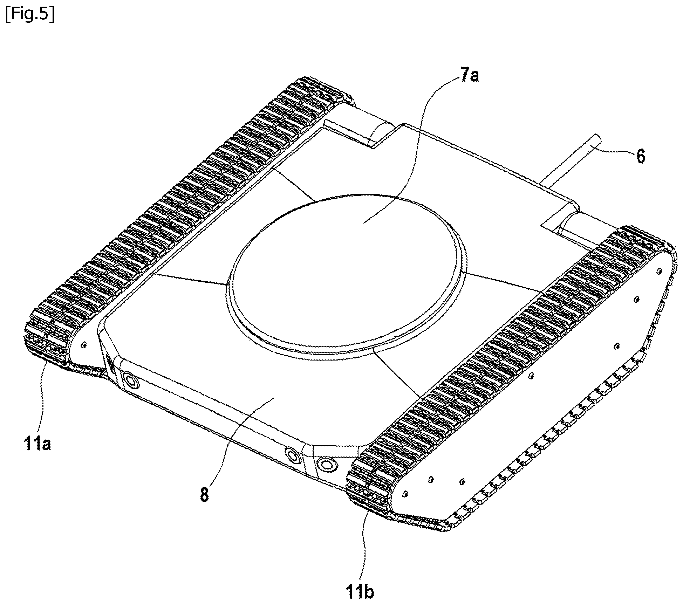

[Fig. 5] La figure 5 est une vue en perspective de ¾ arrière d'un exemple de réalisation d'un robot chargeur conforme à l'invention.
[Fig. 6] La figure 6 est une vue de dessus de l'intérieur d'un robot chargeur conforme à l'invention.
[Fig. 7] La figure 7 est une vue en perspective de la partie intérieure avant d'un robot chargeur conforme à l'invention.
[Fig. 8] La figure 8 est un diagramme fonctionnel pour expliciter le fonctionnement d'un robot chargeur conforme à l'invention.

### Description des modes de réalisation

Tel que cela ressort des figures, l'objet de l'invention concerne un robot chargeur 1 adapté pour se déplacer en vue de charger un accumulateur électrique d'un véhicule à moteur électrique 2 en stationnement. Le robot chargeur 1 est positionné à une station de charge 3 présentant au moins une place pour accueillir en stationnement, un véhicule à moteur électrique 2. La station de charge 3 est équipée d'un appareil d'alimentation électrique 4 tel qu'une borne de recharge reliée électriquement à un réseau électrique domestique ou industriel de tous types connus.

Le robot chargeur 1 se présente sous la forme d'un petit véhicule filaire, relié à l'appareil d'alimentation électrique 4 par un câble électrique 6 qui est un câble de charge pouvant également contenir des lignes de commande. Le robot chargeur 1 comporte un dispositif de connexion électrique 7a pour charger l'accumulateur électrique du véhicule. Ce dispositif de connexion électrique 7a est relié au câble électrique 6, pour recharger l'accumulateur électrique du véhicule à moteur électrique 2 avec une puissance électrique fournie via l'appareil d'alimentation électrique 4.

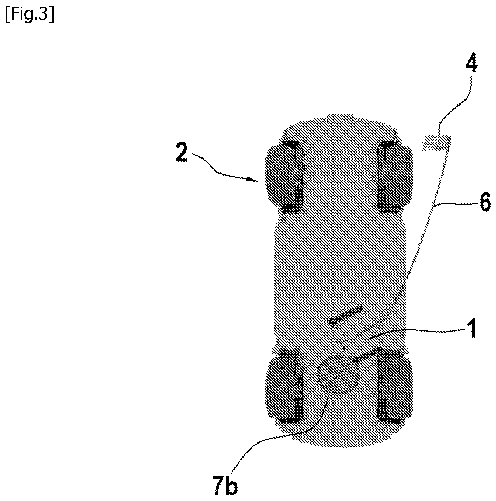

Ce dispositif de connexion électrique 7a équipant le robot chargeur 1 peut être de tous types connus en soi. Dans l'exemple illustré, le dispositif de connexion électrique 7a est du type par couplage magnétique. Selon cet exemple, le robot chargeur 1 comporte un châssis 8 équipé sur sa face supérieure, en tant que dispositif de connexion électrique 7a, d'un inducteur primaire destiné à être amené dans une position relative en correspondance avec un inducteur secondaire 7b monté sur le soubassement du véhicule à moteur électrique 2 (figure 3). Plus précisément, en position en vis-à-vis, de préférence de proximité, l'inducteur primaire 7a et l'inducteur secondaire 7b permettent, par couplage magnétique, la transmission d'une puissance électrique d'un inducteur vers l'autre. Cette transmission de puissance électrique est utilisée notamment pour recharger l'accumulateur électrique du véhicule à moteur électrique 2. Bien entendu, le dispositif de connexion électrique 7a peut être réalisé de manière différente. Ainsi, le robot chargeur 1 peut être équipé d'une tête de contact adaptée pour coopérer avec une prise électrique de charge équipant le soubassement du véhicule à moteur électrique 2. Le dispositif de connexion électrique 7a ne sera pas décrit plus précisément car il est bien connu de l'homme de métier.

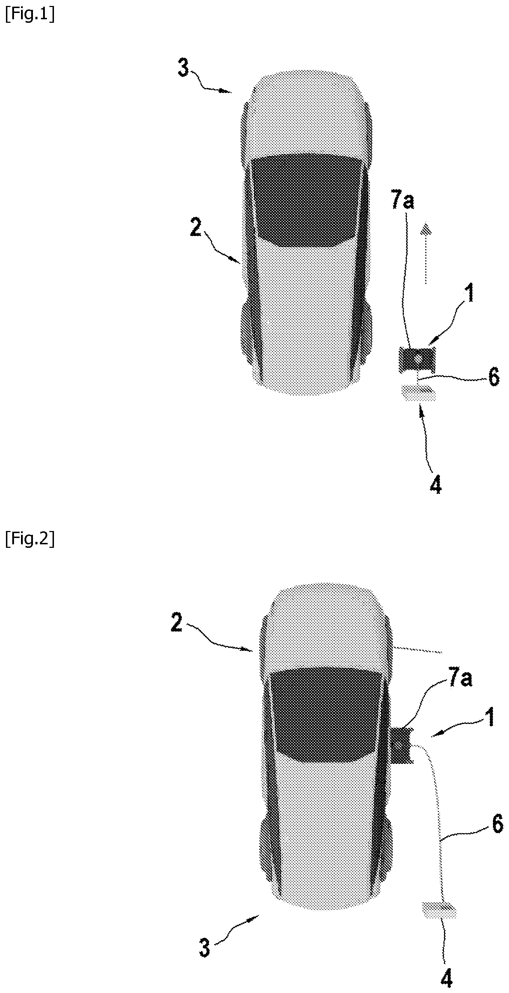

Le robot chargeur 1 est destiné à effectuer un déplacement aller, de sa position d'attente ou de stationnement située à proximité de l'appareil d'alimentation électrique 4 (figure 1) jusqu'à la position de chargement de l'accumulateur électrique du véhicule à moteur électrique 2 (figure 3). Après le chargement de l'accumulateur électrique du véhicule à moteur électrique 2 via le câble électrique 6 et le dispositif de connexion électrique 7a, le robot chargeur 1 effectue un déplacement retour de la position de chargement de l'accumulateur électrique du véhicule, à sa position de stationnement située à proximité de l'appareil d'alimentation électrique 4.

Le robot chargeur 1 comporte un système de déplacement 11 permettant les déplacements du robot chargeur 1 entre l'appareil d'alimentation électrique 4 et le véhicule à moteur électrique 2 en stationnement à recharger. Le système de déplacement 11 peut être réalisé de toute manière appropriée. En tant que système de déplacement 11, le châssis 8 du robot chargeur 1 est équipé dans l'exemple illustré sur les dessins, par une chenille gauche 11a et une chenille droite 11b en considération du sens d'avancement du robot chargeur. Les chenilles gauche 11a et droite 11b sont disposées de part et d'autre du châssis 8 et sont entrainées en déplacement respectivement par des moteurs 11c, 11d dont la commande permet de diriger et de déplacer le robot chargeur 1.

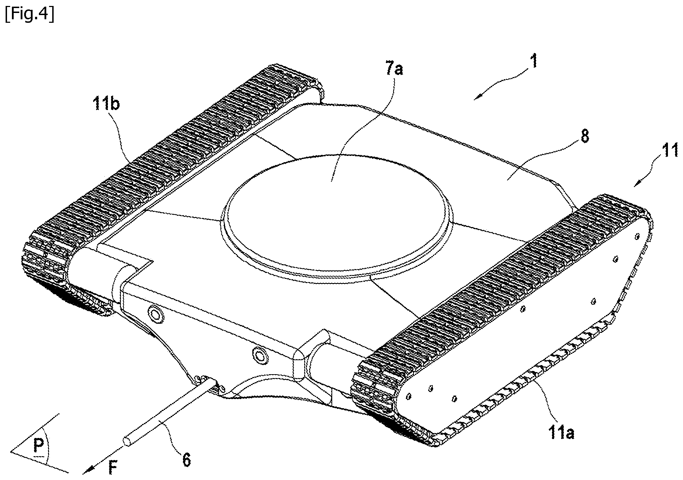

Le système de déplacement 11 assure la progression du robot chargeur selon un plan de déplacement P considéré comme horizontal. Le déplacement en ligne droite du robot chargeur 1 dans ce plan P est représenté par la flèche F sur la figure 4 et passe par le plan de symétrie longitudinal T du robot chargeur.

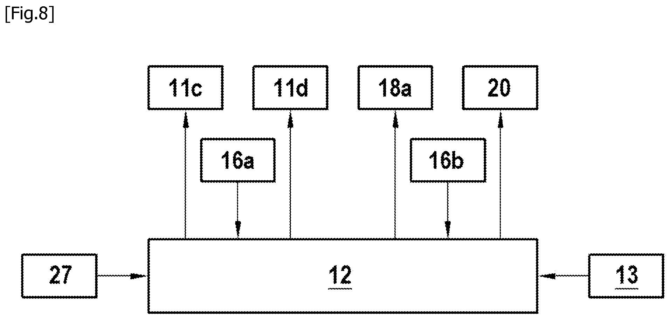

Ce système de déplacement 11 du robot chargeur 1 est piloté par un système de commande 12 (figure 8) agissant sur le système de déplacement du robot chargeur et en particulier sur les moteurs 11c, 11d dans l'exemple illustré, pour déplacer et diriger le robot chargeur selon un trajet déterminé entre l'appareil d'alimentation électrique 4 et l'accumulateur électrique du véhicule à moteur électrique 2 en stationnement. Le système de commande 12 est adapté pour déterminer le trajet du robot chargeur 1 afin que le dispositif de connexion électrique 7a puisse charger l'accumulateur électrique du véhicule à moteur électrique en stationnement.

Dans l'exemple illustré, le système de commande 12 est adapté pour localiser l'inducteur secondaire 7b équipant le soubassement du véhicule à moteur électrique 2 en stationnement de manière à pouvoir guider le robot chargeur 1 de sa position de stationnement à sa position de chargement. Le robot chargeur 1 et/ou le véhicule à moteur électrique 2 comportent des capteurs d'émission et de réception de tous types faisant partie d'un système de navigation 13 communiquant avec le système de commande 12. Par exemple, dans le cas d'un système de navigation 13 de type acoustique, les émetteurs et les récepteurs utilisés sont embarqués sur le robot chargeur 1 et sur le véhicule à moteur électrique 2. Bien entendu, le système de navigation 13 peut employer la lumière ou des ondes radio. Avantageusement, le système de navigation 13 comporte un système de détection d'obstacles tel un Lidar (Light Detection and Ranging) pour piloter le robot chargeur sans risque de collisions.

Le robot chargeur 1 comporte également un système 16 pour dérouler et enrouler automatiquement le câble électrique 6 avec une tension sensiblement nulle sur le câble électrique 6. Dans l'exemple illustré, le système 16 comporte un tambour 17 rotatif d'enroulement pour le câble électrique 6. Le tambour 17 est guidé en rotation sur le châssis 8 autour d'un axe de rotation 17a s'étendant verticalement c'est-à-dire perpendiculairement au plan de déplacement P. Le tambour 17 est entrainé en rotation par une motorisation 18 pilotée pour assurer l'enroulement du câble électrique 6 dans le tambour 17 ou le déroulement du câble électrique 6 à partir du tambour 17. Dans l'exemple illustré, la motorisation 18 comporte un moteur 18a entrainant en rotation par un pignon de sortie 18b, une couronne dentée 18c montée solidaire de la périphérie du tambour 17. Le moteur 18a est piloté par le système de commande 12 pour dérouler le câble électrique 6 du tambour 17 ou enrouler le câble électrique 6 dans le tambour 17.

Selon une caractéristique avantageuse de réalisation, le câble électrique 6 est pris en charge en sortie du tambour 17, par un duo de galets 19a, 19b montés en vis-à-vis pour être en contact de part et d'autre du câble électrique 6. Avantageusement, les galets 19a, 19b sont montés de manière symétrique de part et d'autre du plan longitudinal de symétrie T. Au moins un galet par exemple 19b est relié à une motorisation 20 pilotée pour aider au déplacement du câble électrique lors de son enroulement ou de son déroulement. La motorisation 20 est pilotée par le système de commande 12, en synchronisme avec la rotation du tambour 17 pour aider à la sortie du câble électrique ou à la rentrée du câble électrique 6.

Avantageusement, le système de commande 12 est configuré pour dérouler et enrouler automatiquement le câble électrique 6 avec une tension sensiblement nulle sur le câble électrique. A cet effet, le système de commande 12 est configuré pour dérouler le câble électrique 6 au fur et à mesure de l'avance du robot chargeur 1 et pour enrouler le câble électrique 6 au fur et à mesure du recul du robot chargeur 1 permettant d'exercer une tension sensiblement nulle sur le câble électrique 6. Ainsi, le câble électrique 6 est déposé sur le sol sans tension, au fur et à mesure du déplacement du robot chargeur 1.

Par exemple, le système 16 pour dérouler et enrouler automatiquement le câble électrique avec une tension sur le câble électrique sensiblement nulle, comporte un système de mesure 16a de la distance parcourue par le robot chargeur 1 et un système de mesure 16b de la distance du câble électrique en cours de déroulement ou en cours d'enroulement. Typiquement, le système de mesure 16a de la distance parcourue par le robot chargeur 1 comporte des capteurs de rotation des moteurs 11c, 11d de déplacement du robot chargeur tandis que le système de mesure 16b de la distance du câble comporte un capteur de rotation du moteur 18a et/ou de la motorisation 20. Le système de mesure 16a de la distance parcourue par le robot chargeur 1 et le système de mesure 16b de la distance du câble sont reliés au système de commande 12 qui pilote le tambour 17 et le système de déplacement 11 du robot chargeur de manière que la distance parcourue par le robot chargeur 1 et la distance en cours de déroulement ou d'enroulement du câble électrique 6 dans une même unité de temps reste sensiblement identique.

Selon une caractéristique de l'invention, le robot chargeur 1 comporte un dispositif 25 pour détecter l'orientation par rapport au déplacement du robot chargeur, du câble électrique 6 déroulé en sortie du robot chargeur. Ce dispositif de détection 25 est mis en œuvre lors du déplacement retour du robot chargeur de la position de chargement de l'accumulateur électrique du véhicule à sa position de stationnement, c'est-à-dire lors de l'opération d'enroulement du câble électrique. Ce dispositif de détection 25 est relié au système de commande 12 de manière que lors de l'enroulement du câble électrique 6, le déplacement du robot chargeur 1 suive l'orientation du câble électrique déroulé en sortie du robot chargeur. En d'autres termes, le système de commande 12 agit sur le système de déplacement 11 de manière que lors du trajet de retour, la direction de déplacement du robot chargeur 1 corresponde à l'orientation du câble électrique déroulé lors du trajet aller.

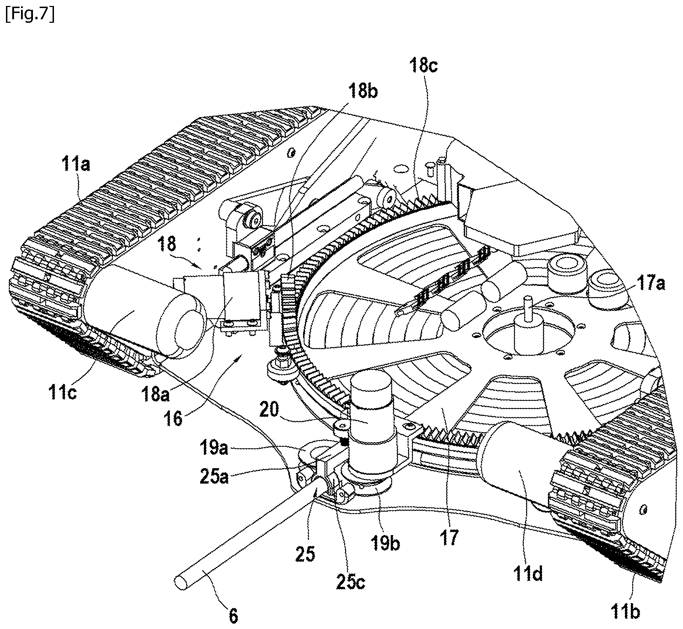

Selon un exemple préféré de réalisation, le dispositif de détection 25 comporte un bras 25a monté pivotant sur le robot chargeur autour d'un axe de rotation 25b monté verticalement c'est-à-dire perpendiculairement au plan de progression P. Avantageusement, l'axe de rotation 25b du bras est situé dans le plan longitudinal de symétrie T. Le bras 25a est monté pour être sollicité angulairement par le câble électrique 6 dans un plan horizontal parallèle au plan de progression P. A cet effet, le bras 25a est pourvu à son extrémité libre, dans l'exemple illustré, d'une fourche 25c à deux bras entre lesquels est engagé le câble électrique 6. Tel que cela ressort plus particulièrement de la figure 7, le bras 25a est monté en surplomb du câble électrique 6 de manière que les deux branches de la fourche 25c s'étendent de part et d'autre du câble électrique 6. L'écartement entre les deux branches de la fourche 25c est adapté pour permettre le coulissement libre du câble électrique 6. Il est à noter que le bras 25a peut être pourvu à son extrémité libre, en remplacement de la fourche, d'un collier présentant un passage de forme oblongue pour le câble électrique 6, légèrement plus grand que le diamètre du câble électrique pour autoriser le libre coulissement du câble électrique.

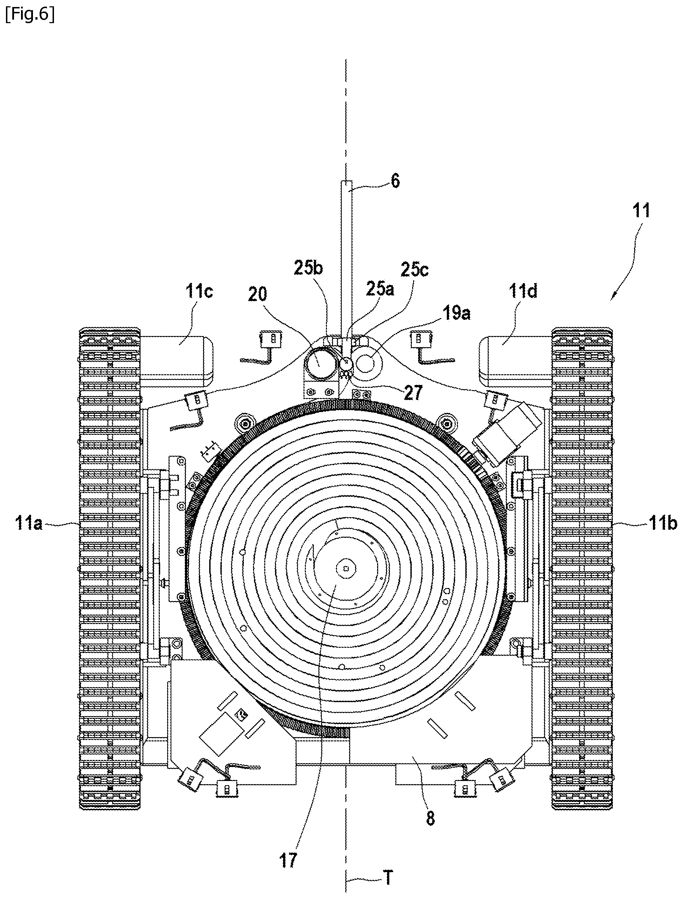

Avantageusement, le bras de détection 25a est monté pour détecter l'orientation du câble électrique 6 en sortie du robot chargeur et plus précisément dès la sortie du duo de galets 19a, 19b. Tel que cela ressort plus précisément des figures 6 et 7, le bras de détection 25a est monté en surplomb de la partie du câble électrique située entre le duo de galets 19a, 19b de manière que sa fourche 25c coopère avec le câble électrique en sortie du duo de galets 19a, 19b. Par exemple, l'axe de rotation 25b du bras de détection est situé dans un plan commun passant par les axes de rotation des galets 19a, 19b.

Le dispositif de détection 25 comporte un capteur 27 de détection du pivotement du bras pivotant 25a dans un plan horizontal parallèle au plan de progression P. Par exemple, ce capteur de détection 27 est un capteur piézoélectrique, un potentiomètre ou tous autres systèmes de mesure d'une rotation. Ce dispositif de détection 25 est relié au système de commande 12 de manière que ce dernier agisse sur le système de déplacement 11 du robot chargeur afin que le pivotement du bras 25a reste inférieur à une valeur limite de déviation. Par exemple, il est considéré que la position de référence du bras pivotant 25a est prise dans le plan longitudinal de symétrie T. Le pivotement du bras pivotant qui est pris dans un plan horizontal parallèle au plan de progression P correspond à un angle d'azimut pris de part et d'autre de la position de référence. Par exemple, la valeur limite de déviation du bras pivotant 25a est par exemple de 45° à gauche et de 45° à droite par rapport à la position de référence. Dès que le capteur de détection 27 détecte une déviation atteignant cette valeur limite de déviation, le système de commande 12 pilote le système de déplacement 11 afin que la direction de déplacement du robot chargeur 1 soit modifiée de sorte que le pivotement du bras 25a reste inférieur à la valeur limite de déviation.

Bien entendu, le dispositif de détection 25 peut être réalisé de manière différente. Ainsi, le dispositif de détection 25 peut comporter une caméra de visualisation du câble électrique 6 déroulé en sortie du robot chargeur. Cette caméra est reliée au système de commande 12 afin que le robot chargeur suive l'orientation du câble électrique déroulé en sortie du robot chargeur. A cet effet, les images prises par la caméra du câble électrique 6 déroulé en sortie du robot chargeur sont analysées de manière à déterminer la direction d'extension du câble électrique et son évolution au fur et à mesure de la progression du robot chargeur.

Le fonctionnement du robot chargeur 1 pour charger un accumulateur électrique d'un véhicule à moteur électrique 2 en stationnement, découle directement de la description qui précède. Le démarrage d'une phase de chargement de l'accumulateur électrique d'un véhicule à moteur électrique 2 en stationnement, par le robot chargeur 1, est réalisé de toute manière appropriée à l'aide par exemple, d'une commande à distance ou d'une commande de l'appareil d'alimentation électrique 4. Au démarrage d'une étape de chargement, le robot chargeur 1 est stationné à proximité de l'appareil d'alimentation électrique 4 de sorte que la majeure partie du câble électrique 6 est enroulée sur le tambour 17 (figure 1).

Ce procédé de chargement comporte une première étape visant à assurer le déplacement aller du robot chargeur 1 de sa position de stationnement illustrée à la figure 1 à la position de chargement de l'accumulateur électrique du véhicule. Lors de son déplacement aller, le robot chargeur 1 est piloté pour dérouler le câble électrique 6 selon une trajectoire déterminée avec une tension sur le câble électrique sensiblement nulle. A cet effet, le système de commande 12 pilote le système de déplacement 11 et en particulier, les moteurs 11c, 11d pour diriger le robot chargeur jusqu'à sa position dans laquelle le chargement de l'accumulateur électrique du véhicule 2 pourra être réalisé. Le trajet aller du robot chargeur 1 est déterminé avantageusement à l'aide du système de navigation 13 afin d'éviter les obstacles.

Par ailleurs, lors de ce trajet aller, le système de commande 12 pilote le système 16 pour dérouler automatiquement le câble électrique 6 avec une tension sensiblement nulle sur le câble électrique. En fonction de la progression du robot chargeur 1 détectée par le système de mesure 16a, le système de commande 12 commande le moteur 18a du tambour 17 et la motorisation 20 du galet de sortie 19b pour dérouler sans tension le câble électrique 6.

Lorsque le robot chargeur 1 a atteint sa position pour réaliser le chargement, alors le système de commande 12 pilote la mise à l'arrêt du robot chargeur et le démarrage de la phase de rechargement de l'accumulateur électrique du véhicule à moteur électrique 2 par le dispositif de connexion électrique 7a. Cette phase de rechargement de l'accumulateur électrique du véhicule à moteur électrique 2 peut être réalisée automatiquement ou par des commandes spécifiques généralement dépendantes du type de dispositif de connexion électrique 7a.

Au terme de la phase de rechargement de l'accumulateur électrique du véhicule à moteur électrique 2, le procédé comporte une étape de déplacement retour du robot chargeur 1 de la position de chargement de l'accumulateur électrique du véhicule à moteur électrique 2 à sa position de stationnement située à proximité de l'appareil d'alimentation électrique 4. Conformément à l'invention, le robot chargeur est déplacé pour suivre la trajectoire du câble électrique 6 déroulé pendant le déplacement aller. En d'autres termes, le câble électrique 6 déroulé pendant le déplacement aller sert de guide pour le déplacement retour du robot chargeur 1 permettant ainsi de le ramener à sa position de départ c'est-à-dire à proximité de l'appareil d'alimentation électrique 4.

A cet effet, le système de commande 12 pilote le système de déplacement 11 afin que le robot chargeur suive la trajectoire de la partie du câble électrique sortie du robot chargeur tout en commandant l'enroulement du câble électrique 6 au fur et à mesure du déplacement retour du robot chargeur. Ainsi, le système de commande 12 pilote le système de déplacement 11 et en particulier les moteurs 11c, 11d, en fonction de l'orientation prise par le câble électrique en sortie du robot chargeur 1. En d'autres termes, le système de commande 12 pilote les moteurs 11c, 11d, afin de compenser la direction de progression du robot chargeur par rapport à l'orientation du câble électrique 6 de sorte que le pivotement du bras pivotant 25a reste inférieur à la valeur limite fixée de déviation. Le robot chargeur suit ainsi la trajectoire définie par le câble électrique déroulé sur le sol lors du trajet aller.

Il est à noter que lors du déplacement retour du robot chargeur 1, le système de commande 12 pilote également le système 16 pour enrouler automatiquement le câble électrique 6. En fonction de la progression du robot chargeur 1 détectée par le système de mesure 16a, le système de commande 12 commande le moteur 18a du tambour 17 et la motorisation 20 du galet de sortie 19b pour enrouler sans tension le câble électrique 6.

Le procédé selon l'invention permet de ramener facilement le robot chargeur à sa position initiale de stationnement sans nécessiter un système onéreux de navigation. Le robot chargeur est ramené en suivant la trajectoire aller grâce au câble électrique 6. Il est à noter que si le câble électrique a été bougé entre son déplacement aller et son déplacement retour, il n'est pas impossible que le robot chargeur 1 puisse détecter sur son trajet retour, un obstacle l'obligeant à s'arrêter. Si un arrêt imprévu du robot chargeur intervient lors du déplacement retour du robot chargeur, un signal d'avertissement est émis pour avertir l'utilisateur d'une anomalie. Ce signal d'avertissement peut prendre différentes formes comme un signal d'alerte transmis à l'utilisateur ou un signal d'avarie affiché par l'appareil d'alimentation électrique 4.

## Revendications

1. Robot chargeur pour charger un accumulateur électrique d'un véhicule à moteur électrique (2) en stationnement, relié via un câble électrique (6), à un appareil d'alimentation électrique (4), le robot chargeur comportant :
- un système (11) de déplacement du robot chargeur,
- un système de commande (12) agissant sur le système de déplacement (11) du robot chargeur pour déplacer le robot chargeur entre l'appareil d'alimentation électrique (4) et l'accumulateur électrique du véhicule à moteur électrique (2) en stationnement,
- un dispositif de connexion électrique (7a) pour charger l'accumulateur électrique du véhicule, relié au câble électrique (6),
- un système (16) pour dérouler et enrouler automatiquement le câble électrique (6) avec une tension sur le câble électrique sensiblement nulle, piloté par le système de commande (12), **caractérisé en ce qu'**il comporte un dispositif de détection (25) pour détecter l'orientation par rapport au déplacement du robot chargeur, du câble électrique (6) déroulé en sortie du robot chargeur, ce dispositif de détection (25) étant relié au système de commande (12) afin que lors de l'enroulement du câble électrique, le déplacement du robot chargeur suive l'orientation du câble électrique (6) déroulé en sortie du robot chargeur.

2. Robot chargeur selon la revendication 1 selon lequel le dispositif de détection (25) détecte l'orientation du câble électrique lors d'un déplacement retour du robot chargeur pour lequel le système (16) enroule le câble électrique avec une tension sensiblement nulle.

3. Robot chargeur selon l'une des revendications 1 ou 2 selon lequel le dispositif de détection (25) comporte un bras (25a) monté pivotant sur le robot chargeur et monté pour être sollicité angulairement par le câble électrique déroulé en sortie du robot chargeur lors du déplacement du robot chargeur, le bras pivotant (25a) sollicitant un capteur (27) de détection du pivotement du bras pivotant, relié au système de commande (12) pour agir sur le système de déplacement (11) du robot chargeur afin que le pivotement du bras reste inférieur à une valeur limite de déviation.

4. Robot chargeur selon la revendication précédente selon lequel le bras pivotant (25a) est monté dans le plan longitudinal de symétrie pour être sollicité en sortie d'un duo de galets (19a, 19b) entrainant le câble électrique en sortie du robot chargeur.

5. Robot chargeur selon l'une des revendications 1 ou 2 selon lequel le dispositif de détection (25) comporte une caméra de visualisation du câble électrique (6) déroulé en sortie du robot chargeur, cette caméra étant reliée au système de commande (12) afin que le robot chargeur suive l'orientation du câble électrique déroulé en sortie du robot chargeur.

6. Robot chargeur selon l'une des revendications 1 à 5 selon lequel le système de commande (12) communique avec un système de navigation pourvu d'un système de détection d'obstacles.

7. Robot chargeur selon l'une des revendications précédentes selon lequel le système (16) pour dérouler et enrouler automatiquement le câble électrique avec une tension sur le câble électrique sensiblement nulle, comporte un système de mesure (16a) de la distance parcourue par le robot chargeur et un système de mesure (16b) de la distance du câble cours de déroulement ou en cours d'enroulement, reliés au système de commande (12) qui pilote le système de déplacement (11) du robot chargeur de manière que la distance parcourue par le robot chargeur et la distance déroulée ou enroulée du câble électrique dans une même unité de temps, reste sensiblement identique.

8. Robot chargeur selon l'une des revendications précédentes selon lequel le câble électrique (6) est pris en charge en sortie d'un tambour d'enroulement (17), par un duo de galets (19a, 19b) dont au moins un galet est relié à une motorisation (20) pilotée pour aider au déplacement du câble électrique.

9. Procédé de fonctionnement d'un robot chargeur (1) conforme à l'une des revendications précédentes pour charger un accumulateur électrique d'un véhicule à moteur électrique (2) en stationnement, relié via un câble électrique (6), à un appareil d'alimentation électrique (4), le procédé comportant les étapes suivantes:
- déplacement aller du robot chargeur (1) de sa position de stationnement à la position de chargement de l'accumulateur électrique du véhicule (2), en déroulant le câble électrique (6) selon une trajectoire avec une tension sur le câble électrique sensiblement nulle,
- chargement de l'accumulateur électrique du véhicule via le câble électrique (6),
- déplacement retour du robot chargeur (1) de la position de chargement de l'accumulateur électrique du véhicule à sa position de stationnement, **caractérisé en ce que** ce déplacement retour est réalisé en détectant l'orientation par rapport au déplacement du robot chargeur, du câble électrique (6) déroulé en sortie du robot chargeur, afin de piloter le déplacement du robot chargeur pour suivre la trajectoire du câble électrique déroulé pendant le déplacement aller et en enroulant le câble électrique au fur et à mesure du déplacement retour du robot chargeur.

10. Procédé selon la revendication précédente selon lequel lors du déplacement retour du robot chargeur, on détecte l'orientation par rapport au déplacement du robot chargeur, du câble électrique (6) déroulé en sortie du robot chargeur, afin de piloter le déplacement du robot chargeur pour suivre l'orientation du câble électrique déroulé en sortie du robot chargeur.

11. Procédé selon l'une des revendications 9 ou 10 selon lequel lorsque lors du déplacement retour du robot chargeur un arrêt imprévu du robot chargeur (1) est détecté, un signal d'avertissement est émis.

## Patentansprüche

1. Laderoboter zum Aufladen eines elektrischen Akkumulators eines parkenden Fahrzeugs mit Elektromotor (2), der über ein elektrisches Kabel (6) mit einem Stromversorgungsgerät (4) verbunden ist, wobei der Laderoboter umfasst:
- ein System (11) zum Fortbewegen des Laderoboters,
- ein Steuersystem (12), das auf das System (11) zum Fortbewegen des Laderoboters einwirkt, um den Laderoboter zwischen dem Stromversorgungsgerät (4) und dem elektrischen Akkumulator des parkenden Fahrzeugs mit Elektromotor (2) fortzubewegen,
- eine elektrische Anschlussvorrichtung (7a), um den elektrischen Akkumulator des Fahrzeugs, der mit dem elektrischen Kabel (6) verbunden ist, aufzuladen,
- ein System (16) zum automatischen Abrollen und Aufrollen des elektrischen Kabels (6), wobei eine Spannung auf das elektrische Kabel im Wesentlichen gleich null ist, das von dem Steuersystem (12) gesteuert wird,
**dadurch gekennzeichnet, dass** er eine Erkennungsvorrichtung (25) umfasst, um die Orientierung des elektrischen Kabels (6), das am Ausgang des Laderoboters abgerollt wird, im Verhältnis zu der Fortbewegung des Laderoboters zu erkennen, wobei diese Erkennungsvorrichtung (25) mit dem Steuersystem (12) verbunden ist, damit beim Aufrollen des elektrischen Kabels die Fortbewegung des Laderoboters der Orientierung des elektrischen Kabels (6), das am Ausgang des Laderoboters abgerollt wird, folgt.

2. Laderoboter nach Anspruch 1, wobei die Erkennungsvorrichtung (25) die Orientierung des elektrischen Kabels bei einer Rückbewegung des Laderoboters, für die das System (16) das elektrische Kabel mit einer Spannung im Wesentlichen gleich null aufrollt, erkennt.

3. Laderoboter nach einem der Ansprüche 1 oder 2, wobei die Erkennungsvorrichtung (25) einen Arm (25a) umfasst, der an dem Laderoboter schwenkbar montiert ist und dazu montiert ist, von dem elektrischen Kabel, das am Ausgang des Laderoboters abgerollt wird, bei der Fortbewegung des Laderoboters winkelmäßig beansprucht zu werden, wobei der Schwenkarm (25a) einen Sensor (27) zum Erkennen des Schwenkens des Schwenkarms beansprucht, der mit dem Steuersystem (12) verbunden ist, um auf das Fortbewegungssystem (11) des Laderoboters einzuwirken, damit das Schwenken des Arms unter einem Abweichungsgrenzwert bleibt.

4. Laderoboter nach dem vorhergehenden Anspruch, wobei der Schwenkarm (25a) in der Längssymmetrieebene montiert ist, um am Ausgang eines Paars von Rollen (19a, 19b), die das elektrische Kabel am Ausgang des Laderoboters mitnehmen, beansprucht zu werden.

5. Laderoboter nach einem der Ansprüche 1 oder 2, wobei die Erkennungsvorrichtung (25) eine Kamera zum Visualisieren des elektrischen Kabels (6) umfasst, das am Ausgang des Laderoboters abgerollt wird, wobei diese Kamera mit dem Steuersystem (12) verbunden ist, damit der Laderoboter der Orientierung des elektrischen Kabels, das am Ausgang des Laderoboters abgerollt wird, folgt.

6. Laderoboter nach einem der Ansprüche 1 bis 5, wobei das Steuersystem (12) mit einem Navigationssystem kommuniziert, das mit einem Hinderniserkennungssystem versehen ist.

7. Laderoboter nach einem der vorhergehenden Ansprüche, wobei das System (16) zum automatischen Abrollen und Aufrollen des elektrischen Kabels, wobei die Spannung auf das elektrische Kabel im Wesentlichen gleich null ist, ein System (16a) zum Messen der von dem Laderoboter zurückgelegten Strecke und ein System (16b) zum Messen der Strecke des Kabels beim Abrollen oder beim Aufrollen umfasst, die mit dem Steuersystem (12) verbunden sind, welches das System (11) zum Fortbewegen des Laderoboters steuert, so dass die von dem Laderoboter zurückgelegte Strecke und die abgerollte oder aufgerollte Strecke des elektrischen Kabels in derselben Zeiteinheit im Wesentlichen identisch bleiben.

8. Laderoboter nach einem der vorhergehenden Ansprüche, wobei das elektrische Kabel (6) am Ausgang einer Aufrolltrommel (17) von einem Paar Rollen (19a, 19b) übernommen wird, von denen mindestens eine Rolle mit einer Motorisierung (20) verbunden ist, die gesteuert wird, um beim Fortbewegen des elektrischen Kabels zu helfen.

9. Verfahren zum Betreiben eines Laderoboters (1) nach einem der vorhergehenden Ansprüche zum Laden eines elektrischen Akkumulators eines parkenden Fahrzeugs mit Elektromotor (2), der über ein elektrisches Kabel (6) mit einem Stromversorgungsgerät (4) verbunden ist, wobei das Verfahren die folgenden Schritte umfasst:
- Hinbewegen des Laderoboters (1) von seiner Parkposition zu der Position zum Aufladen des elektrischen Akkumulators des Fahrzeugs (2), indem das elektrische Kabel (6) gemäß einer Trajektorie abgerollt wird, wobei eine Spannung auf das elektrische Kabel im Wesentlichen gleich null ist,
- Aufladen des elektrischen Akkumulators des Fahrzeugs über das elektrische Kabel (6),
- Zurückbewegen des Laderoboters (1) von der Ladeposition des elektrischen Akkumulators des Fahrzeugs in seine Parkposition,
**dadurch gekennzeichnet, dass** diese Rückbewegung ausgeführt wird, indem die Orientierung im Verhältnis zu der Fortbewegung des Laderoboters des elektrischen Kabels (6), das am Ausgang des Laderoboters abgerollt wird, erkannt wird, um die Fortbewegung des Laderoboters zu steuern, um der Trajektorie des elektrischen Kabels, das während der Hinbewegung abgerollt wird, zu folgen, und indem das elektrische Kabel mit der Rückbewegung des Laderoboters nach und nach aufgerollt wird.

10. Verfahren nach dem vorhergehenden Anspruch, wobei bei der Rückbewegung des Laderoboters, die Orientierung des elektrischen Kabels (6), das am Ausgang des Laderoboters abgerollt wird, im Verhältnis zu der Fortbewegung des Laderoboters erkannt wird, um die Fortbewegung des Laderoboters zu steuern, um der Orientierung des elektrischen Kabels, das am Ausgang des Laderoboters abgerollt wird, zu folgen.

11. Verfahren nach einem der Ansprüche 9 oder 10, wobei, wenn bei der Rückbewegung des Laderoboters ein unerwartetes Anhalten des Laderoboters (1) erkannt wird, ein Warnsignal abgegeben wird.

## Claims

1. A charging robot for charging an electric accumulator of a parked electric motor vehicle (2), connected via an electrical cable (6) to a power supply apparatus (4), the charging robot including:
- a system (11) for moving the charging robot,
- a control system (12) acting on the charging robot movement system (11) in order to move the charging robot between the power supply apparatus (4) and the electric accumulator of the parked electric motor vehicle (2),
- an electrical connection device (7a) for charging the electric accumulator of the vehicle, connected to the electrical cable (6),
- a system (16) for automatically unwinding and winding the electrical cable (6) with a substantially zero tension on the electrical cable, piloted by the control system (12), **characterized in that** it includes a detection device (25) for detecting the orientation, relative to the movement of the charging robot, of the electrical cable (6) unwound at the outlet of the charging robot, this detection device (25) being connected to the control system (12) so that during the winding of the electrical cable, the movement of the charging robot follows the orientation of the electrical cable (6) unwound at the outlet of the charging robot.

2. The charging robot according to claim 1 wherein the detection device (25) detects the orientation of the electrical cable during a return movement of the charging robot, for which the system (16) winds the electrical cable with a substantially zero tension.

3. The charging robot according to any one claims 1 or 2 wherein the detection device (25) includes an arm (25a) pivotally mounted on the charging robot and mounted to be angularly actuated by the electrical cable unwound at the outlet of the charging robot during the movement of the charging robot, the pivoting arm (25a) actuating a sensor (27) for detecting the pivoting of the pivoting arm, connected to the control system (12) to act on the charging robot movement system (11) so that the pivoting of the arm remains below a limit deviation value.

4. The charging robot according to the preceding claim wherein the pivoting arm (25a) is mounted in the longitudinal plane of symmetry to be actuated at the outlet of a pair of rollers (19a, 19b) driving the electrical cable at the outlet of the charging robot.

5. The charging robot according to any of claims 1 or 2 wherein the detection device (25) includes a camera for viewing the electrical cable (6) unwound at the outlet of the charging robot, this camera being connected to the control system (12) so that the charging robot follows the orientation of the electrical cable unwound at the outlet of the charging robot.

6. The charging robot according to any of claims 1 to 5 wherein the control system (12) communicates with a navigation system provided with an obstacle detection system.

7. The charging robot according to any of the preceding claims wherein the system (16) for automatically unwinding and winding the electrical cable with a substantially zero tension on the electrical cable, includes a system for measuring (16a) the distance traveled by the charging robot and a system for measuring (16b) the distance of the cable being unwound or wound, connected to the control system (12) which pilots the charging robot movement system (11) such that the distance traveled by the charging robot and the distance unwound or wound of the electrical cable in the same unit of time remain substantially identical.

8. The charging robot according to any of the preceding claims wherein the electrical cable (6) is supported at the outlet of a winding drum (17) by a pair of rollers (19a, 19b), at least one roller of which is connected to a motorization (20) piloted to assist the movement of the electrical cable.

9. A method for operating a charging robot (1) in accordance with any of the preceding claims for charging an electric accumulator of a parked electric motor vehicle (2) connected via an electrical cable (6) to a power supply apparatus (4), the method including the following steps:
- moving forward the charging robot (1) from its parking position to the charging position of the electric accumulator of the vehicle (2), by unwinding the electrical cable (6) along a trajectory with a substantially zero tension on the electrical cable,
- charging the electric accumulator of the vehicle via the electrical cable (6),
- moving backward the charging robot (1) from the charging position of the electric accumulator of the vehicle to its parking position, **characterized in that** this backward movement is achieved by detecting the orientation, relative to the movement of the charging robot, of the electrical cable (6) unwound at the outlet of the charging robot, in order to pilot the movement of the charging robot to follow the trajectory of the unwound electrical cable during the forward movement and by winding the electrical cable during the backward movement of the charging robot.

10. The method according to the preceding claim wherein, during the backward movement of the charging robot, the orientation, relative to the movement of the charging robot, of the electrical cable (6) unwound at the outlet of the charging robot is detected, in order to pilot the movement of the charging robot to follow the orientation of the electrical cable unwound at the outlet of the charging robot.

11. The method according to any of claims 9 or 10 wherein, when, during the backward movement of the charging robot, an unexpected stop of the charging robot (1) is detected, a warning signal is emitted.
